# EUROPÄISCHE PATENTSCHRIFT

(11) **EP 4 305 258 B1**
(45) Veröffentlichungstag und Bekanntmachung des Hinweises auf die Patenterteilung: **27.11.2024**
(21) Anmeldenummer: 22710057.5
(22) Anmeldetag: 03.03.2022
(51) Int. Cl.: F16B 35/06, E04B 1/41, F16B 7/18, F16B 37/04

(54) **KOMBINATION AUS ANKERSCHIENE UND HAMMERKOPFELEMENT**
COMBINATION OF ANCHOR RAIL AND HAMMER HEAD ELEMENT
COMBINAISON D'UN RAIL D'ANCRAGE ET D'UN ÉLÉMENT EN TÊTE DE MARTEAU

(30) Priorität: 12.03.2021 DE 102021106024
(43) Veröffentlichungstag der Anmeldung: 17.01.2024
(73) Patentinhaber: fischerwerke GmbH & Co. KG, 72178 Waldachtal (DE)
(72) Erfinder: UNTERWEGER, Roland, 72250 Freudenstadt (DE); WIEDNER, Christoph, 6800 Feldkirch (AT); WITTMANN, Falk, 04564 Böhlen (DE)
(86) Internationale Anmeldenummer: PCT/EP2022/055346
(87) Internationale Veröffentlichungsnummer: WO 2022/189239

(56) Entgegenhaltungen:
- DE-U1- 202005 015 592
- DE-U1- 29 705 147
- US-A- 4 950 099
- US-A- 5 655 865

## Beschreibung

Die Erfindung betrifft eine Kombination einer Ankerschiene mit einem Hammerkopfelement mit den Merkmalen des Oberbegriffs des Anspruchs 1.

Zur Befestigung von Objekten an einem Baukörper aus Beton sind Ankerschienen bekannt, die einbetoniert werden. Typischerweise weisen die Ankerschienen eine Schiene mit daran befestigten Ankerbolzen auf. Die Ankerschienen werden vor dem Betonieren mit einer im Folgenden als "Oberseite" bezeichneten Seite der Schiene an die Schalung genagelt oder geschraubt, so dass nur die Oberseite nach dem Aushärten des Betons zugänglich ist. Im Folgenden werden die Richtungsangaben "oben" und "unten" beziehungsweise Begriffe wie "Oberseite" und "Unterseite" stets so verwendet, wie es der Einbausituation im Boden entspricht. Dementsprechend weist bei einer Einbausituation an einer Decke die Oberseite der Schiene nach unten. Die Oberseite weist eine schlitzartige Öffnung auf, so dass ein Hammerkopfelement eingeführt und durch Drehen um beispielsweise 90° verankert werden kann. Als "Hammerkopfelement" werden hier Hammerkopfschrauben, Hammerkopfbolzen und Hammerkopfmuttern verstanden. Von Seitenwänden der Schiene bis zur Öffnung erstrecken sich Lippen, die von dem Hammerkopfelement hintergriffen werden. Auf einer der Oberseite gegenüberliegenden Unterseite weisen die Schienen typischerweise nach unten abstehende Ankerbolzen auf, wobei hier unter einem "Ankerbolzen" sowohl die weit verbreiteten rotationssymmetrischen Bolzen, als auch Sonderformen mit gleicher Funktion, wie Blechstreifen, Drähte oder dergleichen, verstanden werden. Die Ankerbolzen haben die Funktion, Kräfte, die beispielsweise von einer Hammerkopfschraube auf die Schiene wirken, von dieser in den umgebenden Beton zu leiten. Es gibt jedoch auch Ankerschienen ohne Ankerbolzen. Insbesondere werden solche auch wie Montageschienen zur Befestigung ohne Einbetonieren verwendet.

Die Tragfähigkeit derartiger Ankerschienen wird anhand verschiedener Lastfälle bestimmt. Dabei geht es insbesondere zum einen um Zugkräfte, die senkrecht zur Oberseite wirken, und zum anderen um Querkräfte, die parallel zur Längserstreckung der Schiene wirken.

US 5 655 865 A offenbart eine Kombination einer Ankerschiene mit einem Hammerkopfelement mit den Merkmalen des Oberbegriffs des Anspruchs 1.

Aufgabe der Erfindung ist es, eine Kombination aus Ankerschiene und Hammerkopfelement mit erhöhter Tragfähigkeit vorzuschlagen.

Diese Aufgabe wird erfindungsgemäß durch die Kombination einer Ankerschiene mit einem Hammerkopfelement mit den Merkmalen des Anspruchs 1 gelöst. Die Erfindung schlägt eine Ankerschiene, insbesondere zum Einbetonieren, mit einer Schiene vor. Die Schiene weist einen Querschnitt mit im Wesentlichen gleichbleibendem, C-förmigen Profil auf. Die Schiene wird insbesondere aus einem Blechstreifen durch Rollbiegen hergestellt. "C-förmig" schließt hier insbesondere auch eckige Profile ein. Das Profil erstreckt sich entlang einer Längsrichtung, wobei das Profil eine Innenseite und eine Außenseite sowie einen, insbesondere im Wesentlichen rechteckigen, Umriss aufweist, Insbesondere sind die Ecken des Profils abgerundet. Das Profil weist eine Unterseite und eine der Unterseite gegenüberliegende Oberseite sowie zwei, die Ober- und die Unterseite verbindende Verbindungsseiten auf. Neben im Wesentlichen rechteckigen Umrissen sind insbesondere auch solche Umrisse umfasst, bei denen die Unterseite nach unten zuläuft, beispielsweise um einen Kopf eines Ankerbolzens aufzunehmen.

An der Oberseite der Schiene erstreckt sich in Längsrichtung eine Öffnung des C-förmigen Profils. Die Öffnung kann auch als Schlitz aufgefasst werden. Die Öffnung dient insbesondere der Einführung des erfindungsgemäßen Hammerkopfelements.

An der Unterseite der Schiene sind mehrere Ankerbolzen angeordnet wobei die Schiene auch andere Ankerelemente aufweisen kann.

Die Verbindungsseiten werden von Seitenwänden der Schiene gebildet. Die Seitenwände sind insbesondere eben und insbesondere parallel zueinander, sie können aber beispielsweise auch etwas gewölbt und/oder zur Oberseite nach innen geneigt sein. Die Seitenwände weisen insbesondere eine im Wesentlichen einheitliche Dicke auf. Die Verbindungsseiten sind insbesondere gerade.

Das Innere der Schiene kann abgedichtet oder mit einem elastischen Material wie Schaumstoff ausgefüllt sein, um das Hineinfließen von Beton zu verhindern. Nach dem Aushärten des Betons kann die Dichtung oder Füllung entfernt werden.

An der Oberseite erstrecken sich von den Seitenwänden bis zur Öffnung jeweils Lippen. Die Lippen weisen somit eine Auskragung von den Seitenwänden bis zur Öffnung auf. Die Lippen dienen insbesondere dazu, vom Hammerkopfelement hintergriffen zu werden. Das Hammerkopfelement weist einen Hammerkopf auf, der in einer ersten Orientierung in die Öffnung einführbar ist und in einer zweiten Orientierung an der Innenseite an den Lippen zur Anlage bringbar ist, und zwar mit einer den Lippen zugewandten Kopfoberseite des Hammerkopfs. Die beiden Orientierungen unterscheiden sich insbesondere durch eine Drehung um eine zur Oberseite der Ankerschiene senkrechte Achse. Die Drehung erfolgt insbesondere um 60° bis 90°, vorzugsweise um 90°.

Im Weiteren wird zwischen einem eingeführten, kraftlosen Zustand, in dem der Hammerkopf keine kraftbedingte Verformung der Lippen bewirkt, und einem belasteten Zustand, in dem auf den Hammerkopf eine Gebrauchslast wirkt, unterschieden. Im Folgenden werden diese Zustände lediglich als "kraftloser Zustand" und "belasteter Zustand" bezeichnet. Dabei ist "kraftlos" nicht absolut gemeint, da grundsätzlich jede Anlage zu einer Kraftübertragung führt, sondern im Sinne einer bloßen Anlage von Hand oder durch Eigengewicht im Falle einer Überkopfmontage. Insbesondere wird eine Zugkraft von maximal 100 N übertragen. Demgegenüber ist mit dem "belasteten Zustand" gemeint, dass es einen planmäßig erreichbaren Zustand gibt, bei dem insbesondere eine Zugkraft senkrecht zur Oberseite von der Schiene weg als Gebrauchslast wirkt. Die "Gebrauchslast" liegt insbesondere bei über 20 kN und vorzugsweise bei über 30 kN, und wird beispielsweise durch Eigengewicht und Windlasten an einer mit der Ankerschiene befestigten Fassade verursacht.

Im eingeführten, kraftlosen Zustand ist der Hammerkopf erfindungsgemäß mit der Kopfoberseite an der Innenseite des Profils in einem der Öffnung zugewandten Bereich der Lippen in Anlage bringbar. Gleichzeitig besteht in einem den Seitenwänden zugewandten Bereich der Lippen ein Abstand zwischen der jeweiligen Lippe und der Kopfoberseite. Anders ausgedrückt ist der Hammerkopf mittig in Anlage, während seitlich ein Spalt besteht. "Seitlich" meint im Folgenden die Bereiche nahe der Seitenwände und "mittig" die Bereiche nahe der Öffnung. Durch diese Anlage wird erreicht, dass bei niedrigen Zugkräften eine definierte Anlage in einem kleinen Bereich der Kopfoberseite besteht, was die Übertragung von Querkräften begünstigt. Die Anlage in einem kleinen Bereich kann insbesondere dazu genutzt werden, um einen Formschluss zwischen Hammerkopf und Schiene herzustellen, wobei dieser sich durch bereits zuvor bestehende, komplementäre Geometrien ergeben kann, oder durch die Montage geschaffen wird, beispielsweise dadurch, dass sich ein Rändel an der Kopfoberseite in die Lippe einprägt. In einem belasteten Zustand, bei dem höhere Zugkräfte, beispielsweise 40 kN, wirken, kommt der Hammerkopf durch Verformung der Lippen zusätzlich zu dem der Öffnung zugewandten Bereich der Lippen in dem den Seitenwänden zugewandten Bereich der Lippen in Anlage. Die Verformung ist dabei Folge der Gebrauchslast. Der Hammerkopf liegt in diesem Zustand insbesondere im Wesentlichen mit der gesamten Kopfoberseite an. Hierdurch wird die Zugkraft zumindest zusätzlich auch nahe der Seitenwände in die Lippen eingeleitet, wodurch sich der Hebel, der ein Aufbiegen der Lippen bewirkt, verkürzt. Alternativ könnte statt einer Anlage mittig und seitlich die Anlage ausschließlich seitlich erfolgen, also unmittelbar von mittig nach seitlich wechseln. Dies kann sich aber ungünstig auf die Übertragbarkeit von Querkräften auswirken. Die Erfindung schlägt daher vor, dass die Konturen so gestaltet sind, dass zunächst eine zusätzliche Anlage seitlich entsteht und erst bei noch höheren Zugkräften, beispielsweise 60 kN, in dem der Öffnung zugewandten Bereich der Lippen ein Abstand zwischen der jeweiligen Lippe und der Kopfoberseite entsteht. Anders ausgedrückt ist der Hammerkopf bei sehr hohen Zugkräften seitlich in Anlage, während mittig ein Spalt besteht. Somit findet der Hammerkopf weiterhin einen sehr guten Halt in unmittelbarer Nähe zu den Seitenwänden.

Um einen Formschluss zwischen Schiene und Hammerkopfelement in Längsrichtung der Schiene zu erreichen, schlägt die Erfindung vor, dass die Lippe auf der Innenseite in einem Bereich, der näher an der Öffnung als an der Seitenwand liegt, eine Verzahnung aufweist. Die Anlage im kraftlosen Zustand erfolgt insbesondere ausschließlich im Bereich der Verzahnung, wobei die Anlage nicht über die gesamte Breite der Verzahnung erfolgen muss. Dass der Hammerkopf und die Lippen anspruchsgemäß "ausschließlich" mit den Zahnungen und den Verzahnungen in Anlage "bringbar" sind bezieht sich dabei auf einen Zustand, bei dem der Hammerkopf wie beschrieben in einer planmäßigen zweiten Orientierung zur Anlage gebracht wird und nicht etwa einen hypothetischen Zustand, in dem der Hammerkopf beispielsweise derart schräg in Anlage gebracht wird, dass das Hammerkopfelement gar nicht zur Befestigung eines Gegenstands genutzt werden kann.

Vorzugsweise erstreckt sich der seitliche Bereiche der Lippen, in dem der Hammerkopf im kraftlosen Zustand einen Abstand aufweist, in Richtung zur Öffnung bis zu einer Grenze, die mindestens dem 0,25-fachen, insbesondere mindestens dem 0,4-fachen, der Auskragung der Lippe entspricht. Anders ausgedrückt erfolgt seitlich über das 0,25-fache der Auskragung keine Anlage des Hammerkopfs an der Lippe. Der oben genannte Effekt der kleinflächigen Anlage zur Übertragung von Querkräften bei geringen Zugkräften wird hierdurch begünstigt.

Um bei niedrigeren Zugkräften Querkräfte gut übertragen zu können und bei höheren Zugkräften die Kraftübertragung wie beschrieben in der Nähe der Seitenwände zu erreichen, darf der Abstand zwischen der jeweiligen Lippe und der Kopfoberseite weder zu groß noch zu klein sein. Im Folgenden ist mit dem "Abstand" jeweils der Abstand zwischen der jeweiligen Lippe und der Kopfoberseite gemeint, wobei der Abstand senkrecht zur Erstreckung der Oberseite gemessen wird. Dieses Verständnis rührt daher, dass bei höheren Zugkräften eine Bewegung des Hammerkopfs im Wesentlichen senkrecht zur Erstreckung der Oberseite erfolgt und somit der durch den Abstand bestehende Spalt in dieser Richtung mehr oder weniger geschlossen wird. Vorzugsweise entspricht der maximale Abstand an beiden Lippen im kraftlosen Zustand 1% bis 30 %, insbesondere 5% bis 10%, der jeweiligen Auskragung der Lippe.

Zusätzlich oder alternativ schlägt die Erfindung vor, dass der maximale Abstand an beiden Lippen im kraftlosen Zustand jeweils maximal 60% der Differenz zwischen der maximalen Dicke und der minimalen Dicke der Lippe entspricht. Die Dicke der Lippe wird dabei und auch im Folgenden wiederum senkrecht zur Erstreckung der Oberseite gemessen. Bei einer gegebenenfalls vorhandenen Verzahnung an der Lippe bezieht sich die Dicke auf die Hüllkontur, da diese für die Stabilität bestimmend ist, also nicht etwa auf die Kontur im Zahngrund. Insbesondere gilt als Dicke an einer bestimmten Stelle längs der Richtung zur Öffnung jeweils die maximale Dicke des Profils über die gesamte Länge entlang der Längsrichtung.

In absoluten Maßen schlägt die Erfindung vor, dass der maximale Abstand an beiden Lippen im kraftlosen Zustand jeweils zwischen 0,1 mm und 1,5 mm, insbesondere zwischen 0,2 mm und 1,0 mm, liegt.

Die Dicke der Lippen erweitert sich vorzugsweise jeweils in Richtung zur Öffnung, wodurch die Steifigkeit gegenüber Zugkräften am Hammerkopfelement im Vergleich zu einer gleichbleibenden Dicke verbessert wird. Mit "in Richtung zur Öffnung" ist stets die Richtung von der Verbindungsseite zur Öffnung gemeint. Die Erweiterung erfolgt insbesondere stetig, sie kann aber auch Sprünge aufweisen.

Um einerseits im Sinne der Haltekräfte eine hohe Stabilität zu erreichen, andererseits aber auch im Inneren der Schiene ausreichend Platz zur Montage eines Hammerkopfelements zu belassen, schlägt die Erfindung vor, dass das Verhältnis der minimalen Dicke der Lippe zur maximalen Dicke der Lippe zwischen 0,4 und 0,8, insbesondere zwischen 0,5 und 0,75, liegt.

Vorzugsweise entspricht die maximale Dicke der Lippe mindestens dem 1,6-fachen, insbesondere mindestens dem 1,8-fachen, der minimalen Dicke der Seitenwand. Durch ein solches minimales Verhältnis können ausreichend große Wandstärken und ausreichend große Beträge des Anstellwinkels an der Lippe erreicht werden, um hohe Haltekräfte zu erreichen.

Auch das Verhältnis der Auskragung der Lippe zur Dicke ist für die Stabilität und den Platz im Inneren der Schiene von Bedeutung. Die Erfindung schlägt vor, dass die maximale Dicke der Lippe mindestens dem 0,5-fachen, insbesondere mindestens dem 0,6-fachen, der Auskragung der Lippe entspricht.

Die Erfindung wird nachfolgend anhand eines Ausführungsbeispiels erläutert. Die Figuren sind im Wesentlichen maßstäblich.

Es zeigen:
- Figur 1: eine erfindungsgemäße Kombination einer Ankerschiene mit einer Hammerkopfschraube in einer Schnittdarstellung; und
- Figur 2: eine vergrößerte Schnittdarstellung derselben Kombination im Bereich der Anlage der Kopfoberseite der Hammerkopfschraube an einer Lippe der Ankerschiene.

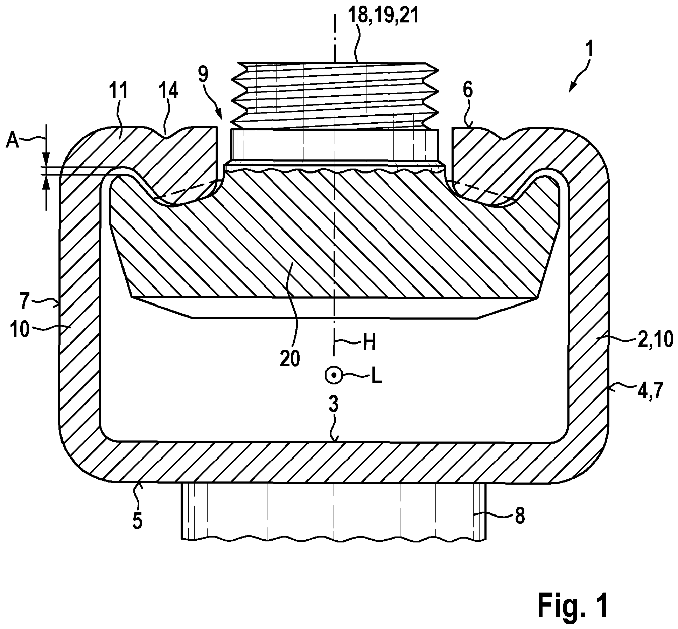

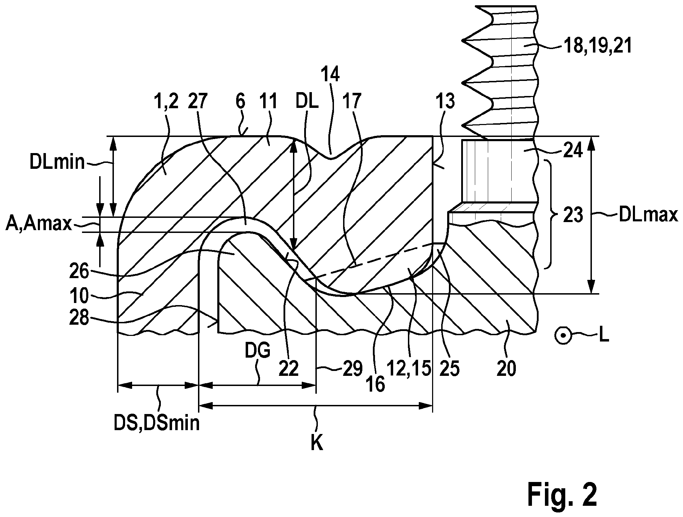

Das in den Figuren 1 und 2 dargestellte Ausführungsbeispiel zeigt einen Querschnitt durch eine erfindungsgemäße Ankerschiene 1. Die Ankerschiene 1 weist eine Schiene 2 mit C-förmigem Profil auf, die sich entlang einer Längsrichtung L erstreckt, wobei die Längsrichtung L in allen Figuren senkrecht zur Zeichenebene verläuft. Das Profil der Schiene 2 weist eine Innenseite 3 und eine Außenseite 4 sowie einen im Wesentlichen rechteckigen Umriss mit abgerundeten Ecken auf. Der Umriss weist außerdem eine Unterseite 5 und eine der Unterseite 5 gegenüberliegende Oberseite 6 auf, die beidseitig durch Verbindungsseiten 7 verbunden sind. Die Unter- und Oberseite 5, 6 sind etwa 1,5-mal so lang wie die Verbindungsseiten 7.

An der Unterseite 5 sind mehrere Ankerbolzen 8 in Form von Kopfbolzen angeordnet. Da die Ankerbolzen 8 in Längsrichtung L hintereinander angeordnet sind, ist nur einer der Ankerbolzen 8 sichtbar. Der Ankerbolzen 8 ist außerdem nur teilweise dargestellt, da es hierauf im Weiteren nicht ankommt. Entlang der Oberseite 6 erstreckt sich in Längsrichtung L eine schlitzartige Öffnung 9 des C-förmigen Profils. Die Verbindungsseiten 7 werden von Seitenwänden 10 gebildet. Von den Seitenwänden 10 bis zur Öffnung 9 erstrecken sich jeweils an der Oberseite 6 Lippen 11. Im Bereich der Öffnungen 9 geht die Innenseite 3 mit Stirnseiten 12 der Lippen 11 in die Außenseite 4 über.

Die Dicke DL der Lippen 11 nimmt jeweils in Richtung zur Öffnung 9 zu. Die Dicke DL der Lippen 11 nimmt also keinen konstanten Betrag an. Die Dicke DL der Lippen 11 ist jeweils senkrecht zur Erstreckung der Oberseite 6 zu messen. Mit der "Erstreckung" ist dabei die Erstreckung längs der Richtung von der Verbindungsseite 7 zur Öffnung 9 gemeint.

Im Folgenden wird eine der beiden Lippen 11 beschrieben, wobei die andere Lippe 11 so wie die gesamte Ankerschiene 1 im Ausführungsbeispiel spiegelsymmetrisch geformt ist. Auf der Innenseite 3 geht die Seitenwand 10 mit einem Radius in die Lippe 11 über. Die Dicke DS der Seitenwand 10 ist konstant und entspricht somit auch einer minimalen Dicke DSmin der Seitenwand 10. Ausgehend von der Seitenwand 10 passiert die Innenseite 3 die schmalste Stelle der Lippe 11, also die Stelle mit einer minimalen Dicke DLmin der Lippe 11 und verläuft dann in einem Winkel von etwa 50° zur Oberseite 6 bis zu einem umgekehrten Radius, an dem die Lippe 11 eine maximale Dicke DLmax annimmt. Die maximale Dicke DLmax der Lippe 11 entspricht etwa dem 2,0-fachen der Dicke DS der Seitenwand 10 und die minimale Dicke DLmin entspricht etwa dem 0,5-fachen der maximalen Dicke DLmax der Lippe 11.

Ausgehend von der Stelle der maximalen Dicke DLmax verläuft die Innenseite 3 mit einer Abrundung 12 und einem durchschnittlichen Winkel von etwa 15° zur Oberseite 6 bis zu einer Stirnseite 13 der Lippe 11, die sich eben und senkrecht zur Oberseite 6 erstreckt. Die Stirnseiten 13 definieren eine Auskragung K der Lippe 11 von der Seitenwand 10 zur Öffnung 9, die auch als "Erstreckung der Lippe 11" aufgefasst werden kann. Das Verhältnis der maximalen Dicke DLmax der Lippe 11 zur Auskragung K beträgt etwa 0,7. Die Oberseite 6 ist nicht vollständig eben, sondern weist eine in Längsrichtung L verlaufende, herstellungsbedingte Rille 14 auf.

Im Bereich der Abrundung 12 weist die Lippe 11 eine sich in Längsrichtung L erstreckende Verzahnung 15. Zahnspitzen 16 erstrecken sich senkrecht zur Längsrichtung L und bilden die Abrundung 12, während ein jeweiliger Zahngrund 17 gerade ist und in einem Winkel von etwa 15° zur Oberseite 6 verläuft. Die zuvor beschriebene Dicke DL der Lippe 11 bezieht sich auf die Hüllkontur der Verzahnung 15, also auf die Zahnspitzen 16, und nicht etwa auf die Kontur im Zahngrund 17, und geht von einer ebenen Oberseite 6 aus, lässt also die Rille 14 außeracht.

Die Schiene 2 wird aus einem ebenen Blechstreifen in einem mehrstufigen Rollbiege-Verfahren geformt (nicht dargestellt). Die Lippen 11 werden insbesondere durch seitliche Rollen, die auf die Stirnseiten des Blechstreifens wirken, aufgedickt.

In die Schiene 2 ist eine Hammerkopfschraube 18 als Hammerkopfelement 19 eingeführt. Dazu wurde ein Hammerkopf 20 der Hammerkopfschraube 18 längs der Öffnung 9, also in Längsrichtung L der Schiene 2, ausgerichtet. Anschließend wurde der Hammerkopf 20 um 90° in die dargestellte Position gedreht. Zur besseren Übersicht ist lediglich ein Teil eines Gewindes 21 der Hammerkopfschraube 18 dargestellt. Mittels einer Mutter und einer Unterlegscheibe kann ein zu befestigendes Element über das Gewinde 21 verbunden werden (nicht dargestellt). Das Anziehen der Mutter bewirkt, dass der Hammerkopf 20 gegen die Innenseite 3 der Schiene 2 im Bereich der Lippe 11 gezogen wird. Der Hammerkopf 20 weist auf seiner der Lippe 11 zugewandten Kopfoberseite 22 eine mit der Lippe 11 korrespondierende Geometrie auf. Ausgehend von einem Übergangsbereich 23, in dem das Gewinde 21 über einen zylindrischen Abschnitt 24 in den Hammerkopf 20 übergeht, erstreckt auf der Kopfoberseite 22 auf beiden Seiten eine Zahnung 25, deren Flankengeometrie derart mit der Flankengeometrie der Verzahnung 15 korrespondiert, dass die Verzahnung 15 im Wesentlichen vollflächig an der Zahnung 25 anliegt. Die Flanken der Zahnung 25 fallen dazu vom Übergangsbereich 23 in einem Winkel von etwa 75° zu einer Längsachse H der Hammerkopfschraube 18 zur Seite ab, wobei mit "zur Seite" die Richtung weg von der Längsachse H der Hammerkopfschraube 18 gemeint ist. Im weiteren Verlauf zur Seite schließt sich an die Zahnung 25 eine Kontur an, die wiederum mit der Lippe 11 korrespondiert und dadurch eine Erhebung 26 bildet. Allerdings liegt die Erhebung 26 nicht an der Lippe 11 an, sondern bildet einen Spalt 27. Anders ausgedrückt besteht ein Abstand A zwischen der jeweiligen Lippe 11 und der Kopfoberseite 22. Gemessen senkrecht zur Oberseite 6 ist der Abstand A im Wesentlichen über den gesamten Spalt 27 gleich und bildet einen maximalen Abstand Amax. Ausgehend von der Erhebung 26 schließt der Hammerkopf 20 mit einer ebenen Seitenfläche 28, die parallel zur Längsachse H der Hammerkopfschraube 18 steht, seitlich ab.

Der zylindrische Abschnitt 24 weist einen Durchmesser auf, der mehr als 80%, im Ausführungsbeispiel etwa 88%, der Weite der Öffnung 9 entspricht.

Der dargestellte Zustand ist ein eingeführter, kraftloser Zustand im Sinne der Erfindung, das heißt, das Hammerkopfelement 19 ist in die Schiene 2 eingeführt und liegt mit allenfalls geringer Kraft an den Lippen 11 an, wobei es zu keiner nennenswerten Verformung kommt. Dies schließt ein, dass die Hammerkopfschraube 18 mit einer gegen die Oberseite 6 verschraubten Mutter (nicht dargestellt) fixiert wird. Der Hammerkopf 20 liegt mit seiner Zahnung 25 an der Innenseite 3 in einem der Öffnung 9 zugewandten Bereich der Lippen 11 an, während in einem den Seitenwänden 10 zugewandten Bereich der Lippen 11 durch den Spalt 27 der Abstand A zwischen der jeweiligen Lippe 11 und der Kopfoberseite 22 besteht. Der Bereich mit Abstand A erstreckt sich bis zu einer Grenze 29. Eine Distanz DG von der Seitenwand 10 bis zur Grenze 29, gemessen parallel zur Oberseite 6, entspricht etwa der Hälfte der Auskragung K der Lippe 11. Der maximale Abstand Amax beträgt etwa 0,6 mm und entspricht damit etwa 7% der Auskragung K sowie etwa einem Viertel der Differenz zwischen der maximalen Dicke DLmax und der minimalen Dicke DLmin der Lippe 11.

Die Ankerschiene 1 ist dazu bestimmt, in einen Untergrund aus Beton (nicht dargestellt) eingegossen zu werden, und zwar so, dass die Oberseite 6 mit der Betonoberfläche abschließt und die Öffnung 9 zum Einführen des Hammerkopfelements 17 zugänglich ist. Mit diesem kann beispielsweise eine Unterkonstruktion für eine Fassade befestigt werden.

Beispielsweise durch das Eigengewicht und durch Windsogkräfte, die auf eine Fassade wirken, werden als Gebrauchslast Zugkräfte, also Kräfte längs der Längsachse H der Hammerkopfschraube 18, und Querkräfte, also Kräfte senkrecht zu den Zugkräften, vom Hammerkopfelement 19 auf die Ankerschiene 1 übertragen. Die Querkräfte, die parallel zur Längsrichtung L der Schiene 2 wirken, können dabei sehr gut durch die Zahnung 25 und die Verzahnung 15 übertragen werden. Dadurch, dass der Hammerkopf 20 nur in diesem Bereich an der Lippe 11 anliegt, kann der Formschluss besonders gut wirken. Sollten hohe Zugkräfte als Gebrauchslast wirken, so stellt sich im Sinne der Erfindung ein belasteter Zustand ein. So bewirkt eine Zugkraft eine Verformung der Lippen 11 in den Figuren nach oben, was auch als Aufbiegen der Lippen 11 verstanden werden kann (nicht dargestellt). Hierdurch kommt zusätzlich zur Verzahnung 15 der Bereich, in dem zuvor der Spalt 27 vorhanden war, zur Anlage, also ein den Seitenwänden 10 zugewandter Bereich der Lippen 11. Durch die zusätzliche Anlage erfolgt die Krafteinleitung in die Lippe 11 weiter in Richtung der Seitenwände 10, was auch als "weniger mittig" oder "seitlicher" aufgefasst werden kann. Dies verringert den wirksamen Hebel, mit dem die Lippe 11 aufgebogen wird, wodurch einer weiteren Verformung und einem Versagen entgegengewirkt wird.

### Bezugszeichenliste

### Kombination aus Ankerschiene und Hammerkopfelement

- 1: Ankerschiene
- 2: Schiene
- 3: Innenseite
- 4: Außenseite
- 5: Unterseite
- 6: Oberseite
- 7: Verbindungsseite
- 8: Ankerbolzen
- 9: Öffnung
- 10: Seitenwand
- 11: Lippe
- 12: Abrundung
- 13: Stirnseite der Lippe 11
- 14: Rille
- 15: Verzahnung
- 16: Zahnspitze
- 17: Zahngrund
- 18: Hammerkopfschraube
- 19: Hammerkopfelement
- 20: Hammerkopf
- 21: Gewinde
- 22: Kopfoberseite
- 23: Übergangsbereich
- 24: zylindrischer Abschnitt
- 25: Zahnung
- 26: Erhebung
- 27: Spalt
- 28: Seitenfläche
- 29: Grenze
- A: Abstand zwischen Lippe 11 und Kopfoberseite 22
- Amax: maximaler Abstand zwischen Lippe 11 und Kopfoberseite 22
- DG: Distanz von der Seitenwand 10 bis zur Grenze 29
- DL: Dicke der Lippe 11
- DLmax: maximale Dicke der Lippe 11
- DLmin: minimale Dicke der Lippe 11
- DS: Dicke der Seitenwand 10
- DSmin: minimale Dicke der Seitenwand 10
- H: Längsachse der Hammerkopfschraube 18
- K: Auskragung der Lippe 11
- L: Längsrichtung der Schiene 2

## Patentansprüche

1. Kombination einer Ankerschiene (1), insbesondere zum Einbetonieren, mit einem Hammerkopfelement (19),
wobei die Ankerschiene (1) eine Schiene (2) aufweist, die einen Querschnitt mit im Wesentlichen gleichbleibendem, C-förmigen Profil aufweist, das sich entlang einer Längsrichtung (L) erstreckt, wobei das Profil eine Innenseite (3) und eine Außenseite (4) sowie einen, insbesondere im Wesentlichen rechteckigen, Umriss mit einer Unterseite (5), mit einer der Unterseite (5) gegenüberliegenden Oberseite (6) und mit zwei, die Ober- und die Unterseite (5, 6) verbindenden Verbindungsseiten (7) aufweist, wobei sich an der Oberseite (6) in Längsrichtung eine Öffnung (9) des C-förmigen Profils erstreckt, wobei an der Unterseite (5) der Schiene (2) insbesondere mindestens zwei Ankerbolzen (8) angeordnet sind, wobei die Verbindungsseiten (7) von Seitenwänden (10) der Schiene (2) gebildet werden,
wobei sich an der Oberseite (6) jeweils Lippen (11) mit einer Auskragung (K) von der jeweiligen Seitenwand (10) bis zur Öffnung (9) erstrecken,
und wobei das Hammerkopfelement (19) einen Hammerkopf (20) aufweist, der in einer ersten Orientierung in die Öffnung (9) einführbar ist und in einer zweiten Orientierung mit einer den Lippen (11) zugewandten Kopfoberseite (22) zur Anlage an der Innenseite (3) der Lippen (11) bringbar ist,
wobei der Hammerkopf (20) in einem eingeführten, kraftlosen Zustand, in dem der Hammerkopf (20) keine kraftbedingte Verformung der Lippen (11) bewirkt, an der Innenseite (3) in einem der Öffnung (9) zugewandten Bereich der Lippen (11) in Anlage bringbar ist und dabei in einem den Seitenwänden (10) zugewandten Bereich der Lippen (11) ein Abstand (A) zwischen der jeweiligen Lippe (11) und der Kopfoberseite (22) besteht,
wobei die Lippen (11) auf der Innenseite (3) in einem der Öffnung (9) zugewandten Bereich eine Verzahnung (15) und in einem den Seitenwänden (10) zugewandten Bereich keine Verzahnung aufweisen,
und wobei der Hammerkopf (20) Zahnungen (25) aufweist und im eingeführten, kraftlosen Zustand der Hammerkopf (20) und die Lippen (11) ausschließlich mit den Zahnungen (25) und den Verzahnungen (15) in Anlage bringbar sind
**dadurch gekennzeichnet, dass** der Hammerkopf (20) in einem belasteten Zustand, in dem auf den Hammerkopf (20) eine Gebrauchslast wirkt, zusätzlich zu dem der Öffnung (9) zugewandten Bereich der Lippen (11) in dem den Seitenwänden (10) zugewandten Bereich der Lippen (11) in Anlage bringbar ist, indem der Hammerkopf (20) eine Verformung der Lippen (11) bewirkt.

2. Kombination nach Anspruch 1, **dadurch gekennzeichnet, dass** sich der den Seitenwänden (10) zugewandte Bereich der Lippen (11), in dem der Hammerkopf (20) im eingeführten, kraftlosen Zustand einen Abstand (A) aufweist, in Richtung zur Öffnung (9) bis zu einer Grenze (29) erstreckt, die mindestens dem 0,25-fachen, insbesondere mindestens dem 0,4-fachen, der Auskragung (K) der Lippe (11) entspricht.

3. Kombination nach einem oder mehreren der vorhergehenden Ansprüche, **dadurch gekennzeichnet, dass** der maximale Abstand (Amax) zwischen der jeweiligen Lippe (11) und der Kopfoberseite (22) an beiden Lippen (11) im eingeführten, kraftlosen Zustand 1% bis 30 % der jeweiligen Auskragung (K) der Lippe (11) entspricht, wobei der Abstand (A) senkrecht zur Erstreckung der Oberseite (6) gemessen wird.

4. Kombination nach einem oder mehreren der vorhergehenden Ansprüche, **dadurch gekennzeichnet, dass** der maximale Abstand (Amax) zwischen der jeweiligen Lippe (11) und der Kopfoberseite (22) an beiden Lippen (11) im eingeführten, kraftlosen Zustand jeweils maximal 60% der Differenz zwischen der maximalen Dicke (DLmax) und der minimalen Dicke (DLmin) der Lippe (11) entspricht, wobei der Abstand (A) senkrecht zur Erstreckung der Oberseite (6) gemessen wird.

5. Kombination nach einem oder mehreren der vorhergehenden Ansprüche, **dadurch gekennzeichnet, dass** der maximale Abstand (Amax) zwischen der jeweiligen Lippe (11) und der Kopfoberseite (22) an beiden Lippen (11) im eingeführten, kraftlosen Zustand jeweils zwischen 0,1 mm und 1,5 mm, insbesondere zwischen 0,2 mm und 1,0 mm, liegt, wobei der Abstand (A) senkrecht zur Erstreckung der Oberseite (6) gemessen wird.

6. Kombination nach einem oder mehreren der vorhergehenden Ansprüche, **dadurch gekennzeichnet, dass** sich jeweils die Dicke (DL) der Lippe (11) in Richtung zur Öffnung (9) hin erweitert.

7. Kombination nach einem oder mehreren der vorhergehenden Ansprüche, **dadurch gekennzeichnet, dass** das Verhältnis der minimalen Dicke (DLmin) der Lippe (11) zur maximalen Dicke (DLmax) der Lippe (11) zwischen 0,4 und 0,8, insbesondere zwischen 0,5 und 0,75, liegt.

8. Kombination nach einem oder mehreren der vorhergehenden Ansprüche, **dadurch gekennzeichnet, dass** die maximale Dicke (DLmax) der Lippe (11) mindestens dem 0,5-fachern, insbesondere mindestens dem 0,6-fachen, der Auskragung (K) der Lippe (11) entspricht.

## Claims

1. A combination of an anchor rail (1), in particular for setting in concrete, with a hammer head element (19),
wherein the anchor rail (1) has a rail (2) which has a cross-section with a substantially uniform, c-shaped profile which extends along a longitudinal direction (L), wherein the profile has an inner side (3) and an outer side (4) and a, in particular substantially rectangular contour with a lower side (5), an upper side (6) opposite the lower side (5), and two connecting sides (7) which connect the upper side and the lower side (5, 6), wherein an opening (9) of the C-shaped profile extends on the upper side (6) in the longitudinal direction, wherein in particular at least two anchor bolts (8) are arranged on the lower side (5) of the rail (2), wherein the connecting sides (7) are formed by side walls (10) of the rail (2),
wherein lips (11) each extend on the upper side (6) with a projection (K) from the respective side wall (10) to the opening (9),
and wherein the hammer head element (19) has a hammer head (20) which can be inserted into the opening (9) in a first orientation and can be brought into contact on the inner side (3) of the lips (11) with an upper side (22) facing the lips (11) in a second orientation,
wherein the hammer head (20) can be brought into contact with the inner side (3) in a region of the lips (11) facing the opening (9) in an inserted, force-free state in which the hammer head (20) does not cause a force-related deformation of the lips (11), while in a region of the lips (11) facing the side walls (10), there is a distance (A) between the respective lip (11) and the head upper side (22),
wherein the lips (11) have a toothing (15) on the inner side (3) in a region facing the opening (9) and no toothing in a region facing the side walls (10),
and wherein the hammer head (20) has teeth (25) and, in the inserted, forceless state, the hammer head (20) and the lips (11) can only be brought into contact with the teeth (25) and the toothing (15), **characterized in that** the hammer head (20), in a loaded state in which a working load acts on the hammer head (20), can be brought into contact in the region of the lips (11) facing the side walls (10) in addition to the region of the lips (11) facing the opening (9), **in that** the hammer head (20) causes a deformation of the lips (11).

2. The combination according to claim 1, **characterized in that** the region of the lips (11) facing the side walls (10) in which the hammer head (20) has a distance (A) in the inserted, force-free state, extends in the direction towards the opening (9) up to a limit (29) which corresponds at least to 0.25 times, in particular at least 0.4 times, the projection (K) of the lip (11).

3. The combination according to one or more of the preceding claims,
**characterized in that** the maximum distance (Amax) between the respective lip (11) and the head upper side (22) at both lips (11) corresponds to 1% to 30% of the respective projection (K) of the lip (11) in the inserted, force-free state, wherein the distance (A) is measured perpendicular to the extension of the upper side (6).

4. The combination according to one or more of the preceding claims,
**characterized in that** the maximum distance (Amax) between the respective lip (11) and the head upper side (22) at both lips (11) in the inserted, force-frees state corresponds in each case to a maximum of 60% of the difference between the maximum thickness (DLmax) and the minimum thickness (DLmin) of the lip (11), wherein the distance (A) is measured perpendicular to the extension of the upper side (6).

5. The combination according to one or more of the preceding claims,
**characterized in that** the maximum distance (Amax) between the respective lip (11) and the head upper side (22) at both lips (11) in the inserted, force-free state is always between 0.1 mm and 1.5 mm, in particular between 0.2 mm and 1.0 mm, wherein the distance (A) is measured perpendicular to the extension of the upper side (6).

6. The combination according to one or more of the preceding claims,
**characterized in that** the thickness (DL) of the lip (11) always widens in the direction towards the opening (9).

7. The combination according to one or more of the preceding claims,
**characterized in that** the ratio of the minimum thickness (DLmin) of the lip (11) to the maximum thickness (DLmax) of the lip (11) is between 0.4 and 0.8, in particular between 0.5 and 0.75.

8. The combination according to one or more of the preceding claims,
**characterized in that** the maximum thickness (DLmax) of the lip (11) corresponds to at least to 0.5 times, in particular at least to 0.6 times the projection (K) of the lip (11).

## Revendications

1. Combinaison d'un rail d'ancrage (1), en particulier pour le bétonnage, comportant un élément en tête de marteau (19),
dans laquelle le rail d'ancrage (1) présente un rail (2) qui présente une section transversale comportant un profil en forme de C sensiblement constant qui s'étend le long d'une direction longitudinale (L), dans laquelle le profil présente un côté intérieur (3) et un côté extérieur (4) ainsi qu'un contour, en particulier sensiblement rectangulaire, comportant un côté inférieur (5), comportant un côté supérieur (6) opposé au côté inférieur (5) et comportant deux côtés de liaison (7) reliant le côté supérieur et le côté inférieur (5, 6), dans laquelle une ouverture (9) du profil en forme de C s'étend sur le côté supérieur (6) dans la direction longitudinale, dans laquelle au moins deux boulons d'ancrage (8) sont en particulier agencés sur le côté inférieur (5) du rail (2), dans laquelle les côtés de liaison (7) sont formés par des parois latérales (10) du rail (2),
dans laquelle, sur le côté supérieur (6), respectivement des languettes (11) comportant un surplomb (K) s'étendent depuis la paroi latérale (10) respective jusqu'à l'ouverture (9),
et dans laquelle l'élément en tête de marteau (19) présente une tête de marteau (20) qui, dans une première orientation, peut être insérée dans l'ouverture (9) et, dans une seconde orientation, peut être amenée, avec un côté supérieur de tête (22) tourné vers les languettes (11), en appui sur le côté intérieur (3) des languettes (11),
dans laquelle la tête de marteau (20), dans un état inséré et sans force, dans lequel la tête de marteau (20) ne provoque pas de déformation des languettes (11) due à la force, peut être amenée en appui sur le côté intérieur (3) dans une zone des languettes (11) tournée vers l'ouverture (9) et, ainsi, il existe un espacement (A) entre la languette (11) respective et le côté supérieur de tête (22) dans une zone des languettes (11) tournée vers les parois latérales (10),
dans laquelle les languettes (11) présentent, sur le côté intérieur (3), une denture (15) dans une zone tournée vers l'ouverture (9) et aucune denture dans une zone tournée vers les parois latérales (10),
et dans laquelle la tête de marteau (20) présente des dentelures (25) et, à l'état inséré et sans force, la tête de marteau (20) et les languettes (11) peuvent être amenées en appui exclusivement avec les dentelures (25) et les dentures (15), **caractérisée en ce que** la tête de marteau (20), dans un état chargé dans lequel une charge d'utilisation agit sur la tête de marteau (20), peut être amenée en appui, en plus de la zone des languettes (11) tournée vers l'ouverture (9), dans la zone des languettes (11) tournée vers les parois latérales (10), par le fait que la tête de marteau (20) provoque une déformation des languettes (11).

2. Combinaison selon la revendication 1, **caractérisée en ce que** la zone des languettes (11) tournée vers les parois latérales (10), zone dans laquelle la tête de marteau (20) présente un espacement (A) à l'état inséré et sans force, s'étend en direction de l'ouverture (9) jusqu'à une limite (29) qui correspond au moins à 0,25 fois, en particulier au moins à 0,4 fois, le surplomb (K) de la languette (11).

3. Combinaison selon l'une ou plusieurs des revendications précédentes, **caractérisée en ce que** l'espacement maximal (Amax) entre la languette (11) respective et le côté supérieur de tête (22) au niveau des deux languettes (11) à l'état inséré et sans force correspond à 1 % à 30 % du surplomb (K) respectif de la languette (11), dans laquelle l'espacement (A) est mesuré perpendiculairement à l'extension du côté supérieur (6).

4. Combinaison selon l'une ou plusieurs des revendications précédentes, **caractérisée en ce que** l'espacement maximal (Amax) entre la languette (11) respective et le côté supérieur de tête (22) au niveau des deux languettes (11) à l'état inséré et sans force correspond respectivement à 60 % au maximum de la différence entre l'épaisseur maximale (DLmax) et l'épaisseur minimale (DLmin) de la languette (11), dans laquelle l'espacement (A) est mesuré perpendiculairement à l'extension du côté supérieur (6).

5. Combinaison selon l'une ou plusieurs des revendications précédentes, **caractérisée en ce que** l'espacement maximal (Amax) entre la languette (11) respective et le côté supérieur de tête (22) au niveau des deux languettes (11) à l'état inséré et sans force est respectivement situé entre 0,1 mm et 1,5 mm, en particulier entre 0,2 mm et 1,0 mm, dans laquelle l'espacement (A) est mesuré perpendiculairement à l'extension du côté supérieur (6).

6. Combinaison selon l'une ou plusieurs des revendications précédentes, **caractérisée en ce que** l'épaisseur (DL) de la languette (11) s'élargit respectivement en direction de l'ouverture (9).

7. Combinaison selon l'une ou plusieurs des revendications précédentes,
**caractérisée en ce que** le rapport de l'épaisseur minimale (DLmin) de la languette (11) à l'épaisseur maximale (DLmax) de la languette (11) se situe entre 0,4 et 0,8, en particulier entre 0,5 et 0,75.

8. Combinaison selon l'une ou plusieurs des revendications précédentes, **caractérisée en ce que** l'épaisseur maximale (DLmax) de la languette (11) correspond au moins à 0,5 fois, en particulier au moins à 0,6 fois, le surplomb (K) de la languette (11).
